# EUROPEAN PATENT SPECIFICATION

(11) **EP 2 235 626 B1**
(45) Date of publication and mention of the grant of the patent: **29.08.2018**
(21) Application number: 08718259.8
(22) Date of filing: 27.03.2008
(51) Int. Cl.: G06F 9/54, G06F 9/445, G06F 9/46, G06F 3/0481

(54) **IMPROVED USER INTERFACE AND COMMUNICATION TERMINAL**
VERBESSERTE BENUTZEROBERFLÄCHE UND KOMMUNIKATIONSENDGERÄT
INTERFACE UTILISATEUR AMÉLIORÉE ET TERMINAL DE COMMUNICATION

(30) Priority: 20.12.2007 US 961592
(43) Date of publication of application: 06.10.2010
(73) Proprietor: Nokia Technologies Oy, 02610 Espoo (FI)
(72) Inventor: LAAKSONEN, Lasse, FIN-37120 Nokia (FI); NURMI, Mikko, FIN-33500 Tampere (FI)
(74) Representative: McDougall, James
(86) International application number: PCT/EP2008/053610
(87) International publication number: WO 2009/080371

(56) References cited:
- US-A1- 2007 061 278
- Greg Harvey: "Windows XP for Dummies - Quick Reference, Deleting Folders and Files" In: "Windows XP for Dummies - Quick Reference, Deleting Folders and Files", 1 January 2005 (2005-01-01), Wiley Publishing Inc., Hoboken NJ 07030-5774, XP055251845, ISBN: 978-0-7645-7464-1 page BP11,
- Andy Rathbone: "Windows XP for Dummies - 2nd Edition" In: "Windows XP for Dummies - 2nd Edition", 1 January 2004 (2004-01-01), Wiley Publishing Inc., Hoboken NJ 07030-5774, XP055251852, ISBN: 978-0-7645-7326-2 page 116,

## Description

### Field of the invention

The present invention generally relates to communication terminals and more particularly to a method for performing a task on a communication terminal, a communication terminal and a computer program product for performing the method,

### Background

On today's smart phones and Personal Digital Assistants (PDA), applications can run individually by selecting the application icon or opening files. If a new action/task have to be performed, it would be necessary to go through several menu items and through trial and error, locate the desired application, or, if a task has been performed before, memorize the location of it. On desktop computers where a larger screen and further input devices, such as a mouse, are available, drag and drop functionalities can be used to move content between applications. If more than one application is needed to complete a task, the applications must be found through the available menu options and opened individually.

Another way of easier locating programs or files on a computer, in order to get a task completed, is through special search programs, where part of a document name or an application is typed in and the program will then quickly locate the desired file, folder or application. As the program is used, it will recognize the previously used search terms and thereby suggest the folder, document or application that was last opened even though the search term may represent many other alternatives.

Communication terminals do not have the same input options as larger communication terminals have, and thus have limited navigation options and selection means, which means that the solutions available for for instance computers, are not transferable to smaller communication terminals.

These prior art examples ail have the drawback of requiring a large screen or specific input devices, such as a mouse or a keyboard, and are thus not transferable to portable devices, that may have a stylus, but lack the larger screen and a proper keyboard. US 2007/0061278 discloses an automatic data retrieved system in which a transferrable object is copied from a first context to a second context.

### Summary

The object of the invention is to provide a method with which a task may be performed on a communication terminal, a communication terminal and a computer program product for performing the method.

The object is accomplished according to a first aspect of the present invention according to claim 1. For example a task may be construed as comprising several actions, to complete the task of acquiring a picture, editing it and sending it via multimedia messaging service (MMS), several applications are needed to 20 perform several actions. The word action may be construed as an element on a menu list. This may be a top menu element or a sub menu element. For example "add contact", "inbox", "new appointment" or any other menu element. A first item, which may be an application, a folder, an icon, a content, a sub process or a file, is analyzed, which here means finding out what actions 25 are available for this item (for example "edit", "copy", "new" etc.), what content types are associated with this item for example if it is a file, then what type is it, or if it is an application, what content types can it handle and in what way. The second step is to receive an indication to initiate a second item associated with a second application. After these steps at least one action of said 30 second application is determined, using output of said analysis of said first item and subsequently at least one action is presented to the user. This means that a set of actions, based on the analysis of the indicated item or items, is presented. Hence the user doesn't have to first open one application,
carry out an action, saving possibly generated content, open another application, go through the menu to locate the wanted action and finding the previously saved file and perform the action. Here the completion of the task will work more as a flow based on the user's conditions. A lot more options become apparent to the user, that the user might not have considered. Furthermore this method saves the user a lot of intermediary steps that otherwise would be necessary. This comprises saving the content, closing the application and searching for the specific desired task in one or more applications, if the user is not quite aware of where the wanted function is located. This enables the user to change the user's mind during completion or become inspired along the way to try out new possibilities, that the user wouldn't become aware of, unless the option was presented in the way it is in the present invention. The term application may be construed as comprising the following, but not limited to: applications, modules, sub processes and folders, such as message module enabling short message service (SMS), e-mail and other message services, or a camera module. An example of this may be that the user opens a messaging application and a folder with images possibly within a certain time period. For example may the communication terminal present a list of actions including "send an image including one of these images" or "create an MMS using one of these images" or "change instant messaging image". A way of implementing this is through tagging of the active content and applying a content type so the subsequent application or sub process knows what options to present the user with. It is possible to have more than two applications or files activated at the same time. Thereby it eases the completion of tasks significantly and at the same time present the user with options that the user might not have considered before.

In another embodiment, the receiving of an indication to initiate a second item associated with a second application is completed before analyzing a first item associated with a first application is completed. This gives the option to have two or more items active at the same time and gives the user the option to combine them in an easy way, without having to go through all the steps that usually would be needed and it works more intuitively for the user. An example of an implementation is where icons, such as "settings" and "messages" associated with corresponding applications, are selected within a certain time period and whereby the user is presented with options that involve messaging settings. Moreover, the application may be a sub-process within a module, such as the sub process of creating a new message with a message module or other sub processes such as "edit", "copy", "paste", "insert" or any other sub processes available in the communication terminal. Another example of this may be that the user selects "new" and "messages" and at the same time pushes a dedicated button to select multiple items. After this the user is presented with the actions "show new messages" and "create new message" or other actions. For example if user selected the applications Calendar and Messaging, device offers end user functions or actions like: "Send meeting request", "Timed message sending", "Send calendar information".

In another embodiment, in the determining, at least two actions are determined, and in presenting, at least two actions are presented according to a user configuration. If there are combinations of items that are often used, the user can move the most frequently used action, or any desired action, to the top of the list of the presented actions. This increases the control for the user and enables the user to quickly personalize the communication terminal.

In another embodiment, in the determining, at least two actions are determined, and in presenting, at least two actions are presented according to a predetermined order. This may be done in a number of different ways for example manually by the user, for example by setting up rules of preference
regarding which actions he or she prefers to have on top of a list, so that would be the easiest or fastest action to chose. For example if the user prefers to have options wherein SMS is contained in the action prioritized, or the actions may be automatically arranged through frequent use of service. Hence the user do not have to take any actions to make the use of the communication terminal easier or faster, just by using the functionality, the communication terminal will adapt to the user. If the communication terminal is to be lent out to somebody else, the communication terminal may offer to save personal settings or lock the function that adapts the user interface, so another person's use would not affect the order of which the different actions are presented.

In another embodiment, regarding the presenting, the actions are emphasized according to previous use of the communication terminal, and wherein frequently used actions are indicated or placed higher on a list of said actions. To make it even easier to select an action, the list of actions may be arranged according to usage so the more often used, appears higher in list. The most frequently used action would be placed on top of a list, while second most used action may be placed second on the list etc. This would make it easier and faster to retrieve and process the action or task. Another way of ease the access to the desired action may be by highlighting, emphasizing or in another way accentuating the most frequently used action. One way of doing it, is by having the communication terminal to pre-select the most frequently used action and just leaving the assignment of confirming the selection to the user. Thereby the amount of user input is minimized and tasks can be performed faster.

In an embodiment, the indication for selection of the second application is received within a predetermined period of time, whereupon said list of actions associated with said selected applications is presented. Hence, multiple items, such as applications, files or folders may be selected within a certain time limit, whereupon a list of available actions is presented to the user. This may apply to not only second, but to subsequently selected applications as well. Hereby the user do not have to change his or her behavior when selecting items, so instead of just selecting one application or item, multiple can be selected and offer new actions not available in the current menu system. The time limit may also be changed by the user if the user desires so. Alternatively, or in combination with the time limit functionality, the indication or selection may also be implemented through for example a double tap on a touch screen, thus indicating that more than one application will be selected. When the last application or process is selected, a single tap is used to signal that the list of actions should be presented.

In another embodiment, wherein the receiving of an indication to initiate a second item associated with a second application, involves receiving an indication using a hardware key, a soft key or a touch screen or any combination thereof. As it is very different what kind of input means the different communication terminals have, and also sometimes very limited, this invention can be applied to any communication terminal regardless if it is equipped with hardware keys, soft keys or touch screen.

In another embodiment, the analyzing of a first item involves analyzing a content associated with said first item. Hence the first item may be an application that, when it is opened, generates a content for example a text file. Then the text file will be the content associated with the first item and thus it will be the text file that is analyzed. This analysis is useful in the implementation, as it enables use of a content, for example in another application, without having to find the file via the new application, as the needed information is already available to the second or consecutive application. Another example of use is in security. For example analysis of data format, size, author or actual content of the file. This gives the owner of the communication terminal a possibility to for example block certain actions on files that the owner for example is the author of, such as in a case where someone else is using the communication terminal.

In another embodiment, said method further comprises receiving an indication for selection of said first application; presenting a first set of actions associated with said first application; and receiving an indication for selection of a first action from said first set of actions providing a content. Hence, after initiating a first application and generating, loading or receiving a content, a second item according the method can be initiated and thus apply the content from the first application directly, without having to open it through the menu system of the second item. This saves the user time and contributes to a general flow perception between items and actions. Furthermore, it can reduce or eliminate superfluous occurrence of shortcuts, file management tools and application linking functionalities in several applications and allowing better control of the number of menus and menu items, while maximizing the number of options available to the user for using the content with on the communication terminal.

In another embodiment, the first item is a content item and there is an information item associated with the content item, the information item indicating whether the content item is active or passive in relation to the second item. This is a way of tagging the content, putting a mark on it to identify it from the rest of the content stored on the communication terminal. The content item can contain information regarding its state, whether it is active or passive, or on other things such as size, author, format, etc. This makes it easy for other applications to access the relevant content. The information item can be associated with the content item automatically, according to certain rules, or manually by the user, for instance when the user wants to apply the content to other items, such as applications, files or folders. This can be done by pressing a button, tapping a graphical item on a display, or in another way indicating that this item is marked for subsequent use,

The above objects, together with numerous other objects, advantages and features, which will become evident from the below description, are accomplished according to a second aspect of the present invention by a communication terminal according to claim 9.

In another embodiment, said applications are selected from a group consisting of a media player application, a message application, a calendar application, a phone book application, an image capturing application, a gaming application, a web browser application, an alarm application, a synchronizing application, a folder, a sub process or any combination thereof. This gives the user the possibility to choose freely among the applications on a communication terminal and try to combine various applications and discover new actions and possibilities.

The above objects, together with numerous other objects, advantages and features, which will become evident from the below description, are accomplished according to a fourth aspect of the present invention by a computer program product according to claim 11.

Items can be rendered in a grid structure, in a list, along a line/curve or any combinations thereof. This may be determined by which type of communication terminal it is, or by the user, thus making it possible to select the preferred view of items, icons or applications or the preferred way of selecting items if more options are available,

The communication terminal may be a cellular phone, a PDA, Portable Data Terminal (PDT), a computer, an Internet device, a tablet computer, a media player or any other terminal used for communication.

The indication for selection of an item is enabled by tapping a touch screen with a stylus or a finger, using a touch wheel, pressing a button, using a scroller, using a joy stick or any combinations thereof. This may be for example combining a push on a hardware key with a push on a soft key, double, triple or multi tapping with a stylus or a finger on a touch screen, encircle the selected items with a stylus on a touch screen or any other way of selecting items and actions on the communication terminal, in this way the user can select the method of selecting that is most convenient for the user. Multiple items may also be selected by using multi-touch and/or drag and drop an item on another item.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief description of the drawings

Embodiments of the present invention will now be described in more detail, reference being made to the enclosed drawings, in which:
Fig. 1 is a schematic illustration of a cellular telecommunication system, as an example of an environment in which the present invention may be applied.
Fig. 2 is a schematic front view illustrating a communication terminal according to an embodiment of the present invention.
Fig. 3 is a schematic block diagram representing an internal component, software and protocol structure of the communication terminal shown in Fig. 2.
Fig. 4 is a flow diagram illustrating one embodiment of the present invention.
Fig. 5 is a flow diagram illustrating one embodiment of the present invention.
Fig. 6 shows another embodiment of the present invention.
Fig. 7 shows another embodiment of the present invention.

### Detailed description of embodiments

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

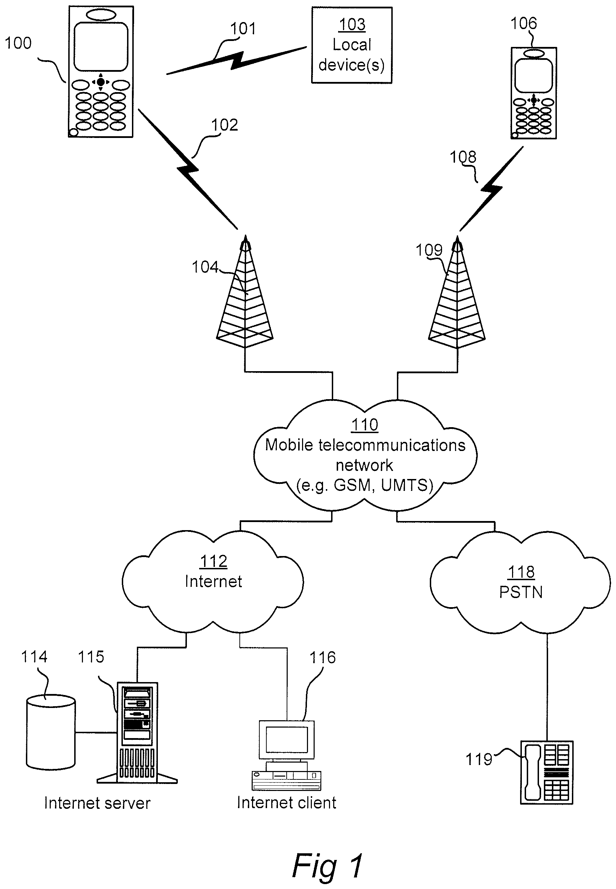

Fig. 1 illustrates an example of a cellular telecommunications system in which the invention may be applied. In the telecommunication system of fig. 1, various telecommunications services such as cellular voice calls, www/wap browsing, cellular video calls, data calls, facsimile transmissions, music transmissions, still image transmissions, video transmissions, electronic message transmissions and electronic commerce may be performed between a communication terminal 100 according to the present invention and other devices, such as another communication terminal 106 or a stationary telephone 119. It is to be noted that for different embodiments of the communication terminal 100 and in different situations, different ones of the telecommunications services referred to above may or may not be available; the invention is not limited to any particular set of services in this respect. The communication terminals 100, 106 are connected to a mobile telecommunications network 110 through radio frequency (RF) links 102, 108 via base stations 104, 109. The mobile telecommunications network 110 may be in compliance with any commercially available mobile telecommunications standard, such as Global System Mobile (GSM), Universal Mobile Telecommunications System (UMTS), Digital-Advanced Mobile Phone Service (DAMPS), Code Division Multiple Access2000 (CDMA2000), (Freedom of Mobile Multimedia Access) FOMA and Time Division-Synchronous Code Division Multiple Access (TD-SCDMA). The mobile telecommunications network 110 is operatively connected to a wide area network 112, which may be Internet or a part thereof. An Internet server 115 has a data storage 114 and is connected to the wide area network 112, as is an Internet client computer 116. The server 115 may host a www/wap server capable of serving www/wap content to the communication terminal 100. A public switched telephone network (PSTN) 118 is connected to the mobile telecommunications network 110 in a familiar manner. Various telephone terminals, including the stationary telephone 119, are connected to the PSTN 118. The communication terminal 100 is also capable of communicating locally via a local link 101 to one or more local devices 103. The local link can be any type of link with a limited range, such as Bluetooth®, a Universal Serial Bus (USB) link, a Wireless Universal Serial Bus (WUSB) link, an IEEE 802.11 wireless local area network link, a recommended standard 232 (RS-232) serial link, etc.

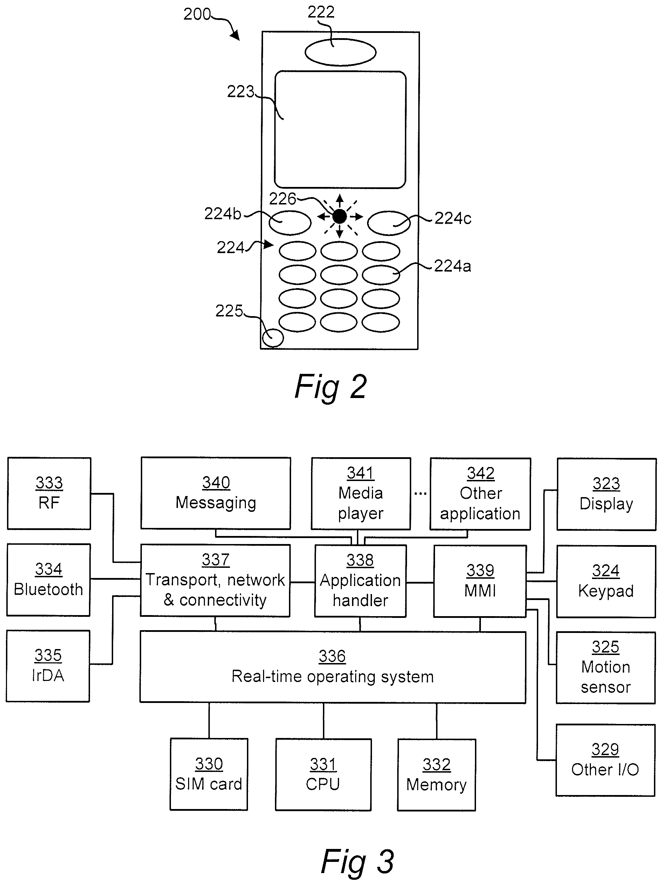

An embodiment 200 of the communication terminal 100 is illustrated in more detail in fig. 2. The communication terminal 200 comprises a speaker or earphone 222, a microphone 225, a display 223 and a set of keys 224 which may include a keypad 224a of common International Telecommunications Union Telecommunication Standardization Sector (ITU-T) type (alphanumerical keypad representing characters "0"-"9", "*" and "#") and certain other keys such as soft keys 224b, 224c and a joystick 226 or other type of navigational input device.

The internal component, software and protocol structure of the communication terminal 200 will now be described with reference to fig. 3. The communication terminal has a controller 331 which is responsible for the overall operation of the communication terminal and is preferably implemented by any commercially available Central Processing Unit (CPU), Digital Signal Processor (DSP) or any other electronic programmable logic device. The controller 331 has associated electronic memory 332 such as random access memory (RAM), Read-only memory (ROM), Electrically Erasable Programmable Read-Only-Memory (EEPROM), flash memory, or any combination thereof. The memory 332 is used for various purposes by the controller 331, one of them being for storing data and program instructions for various software in the communication terminal. The software includes a real-time operating system 336, drivers for a man-machine interface (MMI) 339, an application handler 338 as well as various applications. The applications can include a messaging application 340 for sending and receiving SMS, MMS or email, a media player application 341, as well as various other applications 342, such as applications for voice calling, video calling, web browsing, an instant messaging application, a phone book application, a calendar application, a control panel application, a camera application, one or more video games, a notepad application, etc. The MMI 339 also includes one or more hardware controllers, which together with the MMI drivers cooperate with the display 323/223, keypad 324/224, motion sensor 325, such as an accelerometer, as well as various other input/output (I/O) devices 329 such as microphone, speaker, vibrator, ring tone generator, light emitting diode (LED) indicator, etc. As is commonly known, the user may operate the communication terminal through the man-machine interface thus formed.

The software also includes various modules, protocol stacks, drivers, etc., which are commonly designated as 337 and which provide communication services (such as transport, network and connectivity) for an RF interface 333, and optionally a Bluetooth® interface 334 and/or an Infrared Data Association (IrDA) interface 335 for local connectivity. The RF interface 333 comprises an internal or external antenna as well as appropriate radio circuitry for establishing and maintaining a wireless link to a base station (e.g. the link 102 and base station 104 in fig. 1). As is well known to a man skilled in the art, the radio circuitry comprises a series of analogue and digital electronic components, together forming a radio receiver and transmitter. These components include, i.e., band pass filters, amplifiers, mixers, local oscillators, low pass filters, analog-to-digital/digital-to-analog (AD/DA) converters, etc. The communication terminal also has a subscriber identity module (SIM) card 330 and an associated reader. As is commonly known, the SIM card 330 comprises a processor as well as local work and data memory.

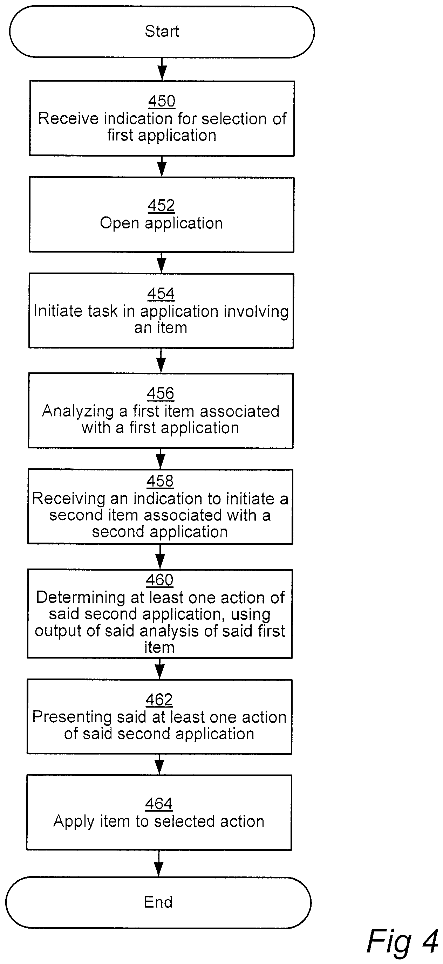

Fig. 4 is a flow diagram illustrating one embodiment of the present invention. In step 450 the communication terminal receives an indication for selection of a first application, which it then reacts to and opens the application in step 452. Hereafter, a task is initiated involving an item. An item in this case may be a content for example a text file, music file, a contact, a calendar entry, a folder, an application, a sub process or any other form of data contained in the communication terminal. The item is included, created, received, opened or in another way involved in step 454. In step 456 a first item associated with a first application is analyzed. The word analyze comprises for instance analyzing a tag associated with a content or analyzing which actions and content types are available for the specific item. Analysis may take place after receiving an indication to initiate a second item, which in this diagram is step 458. Now when at least two items are active at least one action is determined using output from the analysis of the first item. The analysis may comprise of analysis of several items, all being a determining factor in determining which action or actions to present. In step 462 the alternative actions are presented, which are all actions where the active item previously analyzed can be applied. In step 464 the item is applied to the selected action. An example of the actions the user has, when flowing from first item to another. Here, the user has an image file (e.g., taken with the Camera application) and the user proceeds to the Music player. The application asks the user, what to do with the image item. Here the first options are to use the image as a thumbnail in a Music player item (like album thumbnail or artist thumbnail) or creating a new playlist item based on the image.

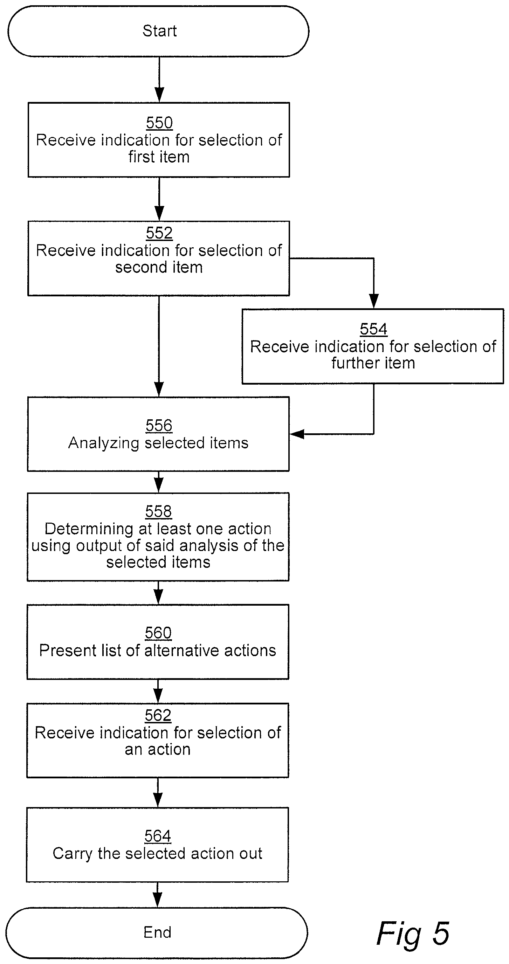

Fig. 5 is a flow diagram illustrating another embodiment of the present invention. Here a double or multiple selection of applications take place before any actions are initiated. In step 550 and 552 the communication terminal receives an indication for selection of a first item and a second item respectively. In step 554 the communication terminal can receive an indication for selection of a further item. When there has been received indication for selection of items within a certain time or by indication through for example a button, the items are analyzed, step 556, in order to determine what actions to offer the user, step 558. This may be done by for example by coupling certain actions or data types to each item, the item being an application, a folder, a file, a content, a sub process or any item selectable on a communication terminal, and then combining this data, generating a list of actions, which is presented in step 560. After this an indication for selection of an action is received in step 562, and the action is carried out in step 564.

It would also be a possibility to combine figure 4 and 5 by for example going from step 560 in figure 5 to step 456 in figure 4, where the item or content generated or opened or in some other way activated in figure 5 can be applied in subsequent applications.

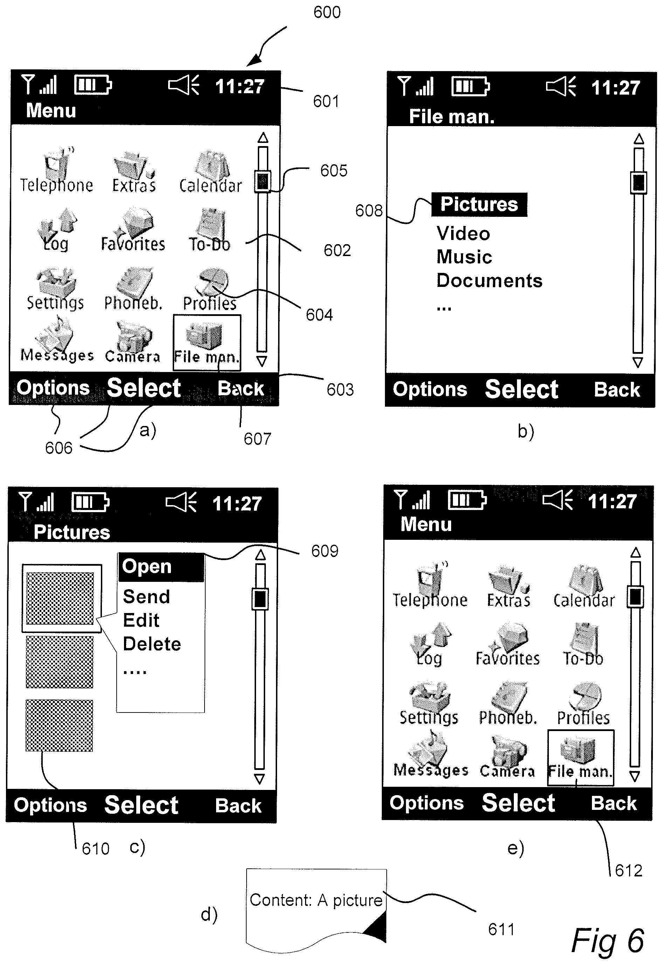

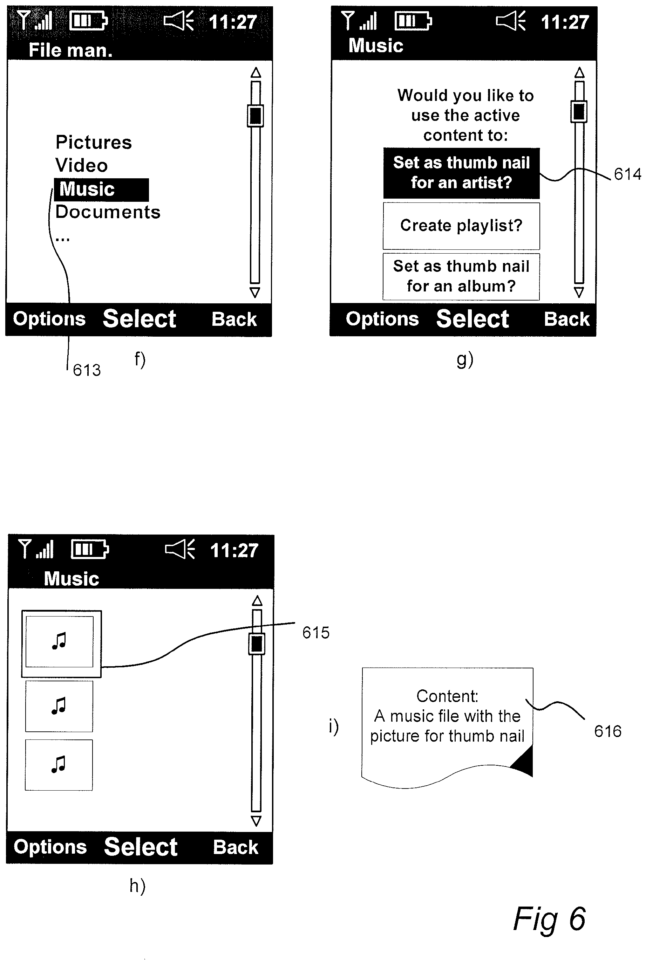

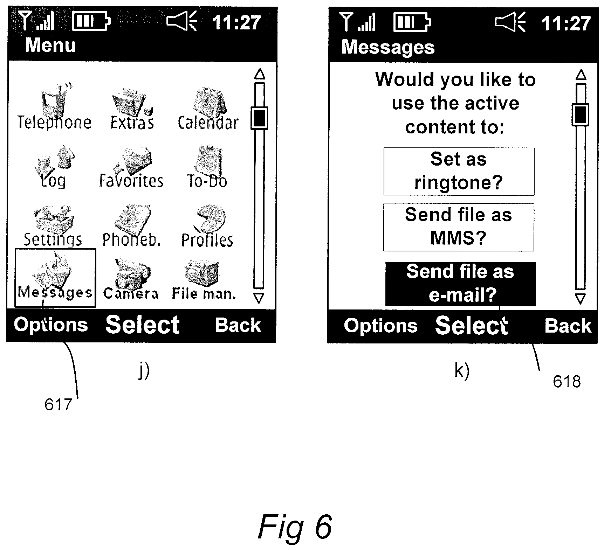

Fig. 6 shows an embodiment of the present invention. Here are examples of screen shots shown. The screen shot may contain more information and more options than depicted in this drawing. This figure may be interpreted as an implementation of the embodiment illustrated in the flow diagram in figure 4. In figure 6 a) a screen shoot 600 comprises a status pane 601, a menu pane 602, a control pane 603, menu items 604, scrollbar 605, soft keys 606 and a selected menu item 607. Several of the elements are also present on figures 6 b)- k). First in fig. 6 a) a menu item, file management 607 is selected, on fig. 6 b) a list of file categories is presented and pictures 608 has been selected, either via a touch screen or a soft key. In fig. 6 c) a group of pictures 610 is shown and a list of actions 609 is displayed after a picture has been chosen. The option open is selected and the content, the picture chosen, has now been tagged 611 as illustrated in fig. 6 d). This can be done in several ways, for example by receiving user input by holding a button down while the file is opened, or receiving user input and tagging it after it is opened or by receiving user input when returning to the menu screen to select further items or it can be done automatically or according to user settings. In fig. 6 e) the menu item file management 612 is chosen and the screen in fig 6. f) is shown. Here the category music is chosen 613 and the action list in fig. 6 g) is shown. The communication terminal will analyze how the tagged content can be applied here and present alternative options, the option "set as thumb nail for an artist" is chosen and the fig. 6 h) is displayed were the user can chose which music file 615 to associate the picture with. A new tagged content 616 in fig. 6 i) is created containing the picture as a thumb nail on the music file. In fig. 6 j) messages 617 is selected and in fig. 6 k) a list of actions is presented and send file as email is chosen 618. This will make the communication terminal display an emailing application where the file can be sent to a receiver (not shown).

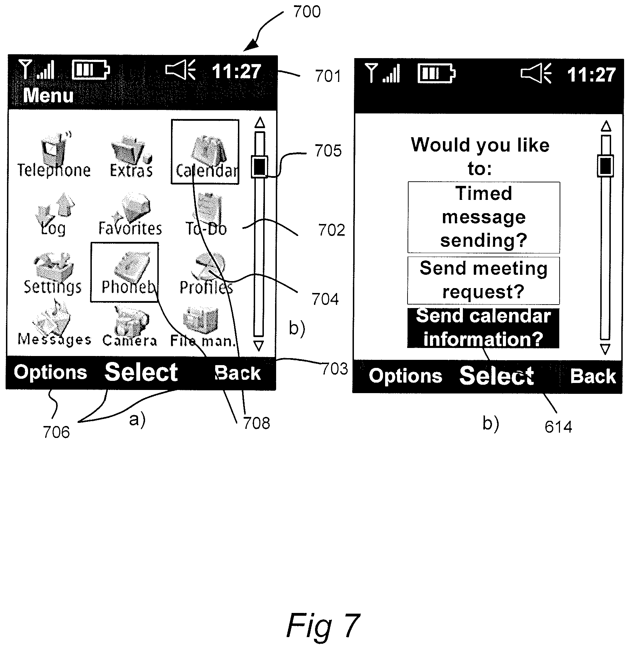

Fig. 7 shows an embodiment in the form of an implementation of the flow diagram in figure 5. In figure 7 a) a screen shot 700 comprises a status pane 701, a menu pane 702, a control pane 703, menu items 704, scrollbar 705, soft keys 706 and a selected menu item 707. First in fig. 7 a) two menu items 708 are selected, the calendar and the phonebook application. In fig. 7b) a list of actions available for this combination of applications is displayed and the user can then choose the desired action. Here "send calendar information" 614 has been selected.

## Claims

1. A method for performing a task on a communication terminal (100, 200) comprising a display (223, 323), said method comprising:
- receiving an indication to initiate a first item associated with a first application (550);
- tagging the first item for subsequent use by a second item;
- receiving an indication to initiate a second item associated with a second application (552);
**characterized in that**:
- said first item is a content item, wherein an information item is associated with said content item, said information item indicating whether said content item is tagged active for subsequent use by the second item, or whether said content item is passive in relation to said second item;
the method further **characterized by** comprising:
- analyzing the first and second items (556) to determine at least one selectable action available for combining the first and second applications and performable by the second application using the tagged active content associated with said first item (558); and
- presenting said at least one selectable action (560) on the display.

2. The method according to claim 1 where receiving the indication to initiate the second item associated with the second application is completed before analyzing the first item associated with the first application is completed.

3. The method according to claim 1 further comprising:
- adapting a user interface according to the initiated item or items; and
- highlighting actions that are associated with the selected items.

4. The method according to claim 1, wherein in said presenting, at least two selectable actions are presented according to a user configuration.

5. The method according to claim 1, wherein in said presenting, at least two selectable actions are presented according to a predetermined order.

6. Method according to claim 5, wherein in said presenting, said at least two selectable actions are arranged according to previous use of said communications terminal, and wherein frequently used selectable actions are presented higher on a list of said selectable actions.

7. The method according to claim 1, comprising receiving said indication to initiate said second item within a predetermined period of time from receiving the indication to initiate said first item, whereupon a list of selectable actions available for combining the first and second applications is presented.

8. The method according to claim 1, wherein said receiving an indication to initiate a second item associated with a second application, involves receiving an indication using a hardware key, a soft key or a touch screen or any combination thereof.

9. A communication terminal (100, 200) configured to perform a task involving at least a first and a second item, comprising a controller (331) and a display (223, 323), wherein:
- said controller is adapted to receive an indication to initiate a first item associated with a first application;
- said controller is adapted to tag the first item for subsequent use by a second item;
- said controller is adapted to receive an indication to initiate a second item associated with a second application;
**characterized in that**:
- said first item is a content item, wherein an information item is associated with said content item, said information item indicating whether said content item is tagged active for subsequent use by the second item or is passive in relation to said second item;
- said controller is adapted to analyze the first and second items to determine at least one selectable action available for combining the first and second applications and performable by the second application using the tagged active content associated with said first item; and
- said controller is adapted to present said a least one selectable action on the display.

10. A communication terminal according to claim 9, wherein said first and second applications are any of a media player application, a message application, a calendar application, a phone book application, an image capturing application, a gaming application, a web browser application, an alarm application, a synchronizing application, or any combination thereof.

11. A computer program product embodied in a memory of a communication terminal comprising software instructions that, when executed in a controller of said communication terminal, performs the method according to any of claims 1-8.

## Patentansprüche

1. Verfahren zum Durchführen einer Aufgabe auf einem Kommunikationsendgerät (100, 200), umfassend eine Anzeige (223, 323), das Verfahren umfassend:
- Empfangen einer Angabe zum Einleiten eines ersten Elements in Verknüpfung mit einer ersten Anwendung (550);
- Kennzeichnung des ersten Elements zur anschließenden Verwendung durch ein zweites Element;
- Empfangen einer Angabe zum Einleiten eines zweiten Elements in Verknüpfung mit einer zweiten Anwendung (552);
**dadurch gekennzeichnet, dass**:
- das erste Element ein Inhaltselement ist, wobei ein Informationselement mit dem Inhaltselement verknüpft ist, wobei das Informationselement angibt, ob das Inhaltselement zur anschließenden Verwendung durch das zweite Element als aktiv gekennzeichnet ist oder ob das Inhaltselement in Bezug auf das zweite Element passiv ist;
das Verfahren ferner **dadurch gekennzeichnet, dass** es umfasst:
- Analysieren des ersten und zweiten Elements (556), um zumindest eine wählbare Aktion zu bestimmen, die zum Kombinieren der ersten und zweiten Anwendung verfügbar ist und durch die zweite Anwendung unter Verwendung des gekennzeichneten aktiven Inhalts, der mit dem ersten Element (558) verknüpft ist, durchführbar ist; und
- Präsentieren der zumindest einen wählbaren Aktion (560) auf der Anzeige.

2. Verfahren nach Anspruch 1, wobei ein Empfangen der Angabe zum Einleiten des zweiten Elements in Verknüpfung mit der zweiten Anwendung beendet ist, bevor ein Analysieren des ersten Elements in Verknüpfung mit der ersten Anwendung beendet ist.

3. Verfahren nach Anspruch 1, ferner umfassend:
- Anpassen einer Benutzerschnittstelle gemäß dem eingeleiteten Element oder den eingeleiteten Elementen; und
- Hervorheben von Aktionen, die mit den gewählten Elementen verknüpft sind.

4. Verfahren nach Anspruch 1, wobei beim Präsentieren zumindest zwei wählbare Aktionen gemäß einer Benutzerkonfiguration präsentiert werden.

5. Verfahren nach Anspruch 1, wobei beim Präsentieren zumindest zwei wählbare Aktionen gemäß einer vorgegeben Reihung präsentiert werden.

6. Verfahren nach Anspruch 5, wobei beim Präsentieren die zumindest zwei wählbaren Aktionen gemäß einer vorherigen Verwendung des Kommunikationsendgeräts angeordnet sind und wobei häufig verwendete wählbare Aktionen höher auf einer Liste der wählbaren Aktionen präsentiert werden.

7. Verfahren nach Anspruch 1, umfassend ein Empfangen der Angabe zum Einleiten des zweiten Elements innerhalb eines Zeitraums vom Empfangen der Angabe bis zum Einleiten des ersten Elements, woraufhin eine Liste auswählbarer Aktionen, die zum Kombinieren der ersten und zweiten Anwendung verfügbar sind, präsentiert wird.

8. Verfahren nach Anspruch 1, wobei das Empfangen einer Angabe zum Einleiten eines zweiten Elements, das mit einer zweiten Anwendung verknüpft ist, ein Empfangen einer Angabe unter Verwendung einer Hardware-Taste, einer Softkey-Taste oder eines Berührungsbildschirms oder einer beliebigen Kombination davon beinhaltet.

9. Kommunikationsendgerät (100, 200), das zum Durchführen einer Aufgabe konfiguriert ist, die zumindest ein erstes und ein zweites Element beinhaltet, umfassend eine Steuerung (331) und eine Anzeige (223, 323), wobei:
- die Steuerung angepasst ist, eine Angabe zum Einleiten eines ersten Elements in Verknüpfung mit einer ersten Anwendung zu empfangen;
- die Steuerung angepasst ist, das erste Element zur anschließenden Verwendung durch ein zweites Element zu kennzeichnen;
- die Steuerung angepasst ist, eine Angabe zum Einleiten eines zweiten Elements in Verknüpfung mit einer zweiten Anwendung zu empfangen;
**dadurch gekennzeichnet, dass**:
- das erste Element ein Inhaltselement ist, wobei ein Informationselement mit dem Inhaltselement verknüpft ist, wobei das Informationselement angibt, ob das Inhaltselement zur anschließenden Verwendung durch das zweite Element als aktiv gekennzeichnet ist oder in Bezug auf das zweite Element passiv ist;
- die Steuerung angepasst ist, das erste und zweite Element zu analysieren, um zumindest eine wählbare Aktion zu bestimmen, die zum Kombinieren der ersten und zweiten Anwendung verfügbar ist und durch die zweite Anwendung unter Verwendung des gekennzeichneten aktiven Inhalts, der mit dem ersten Element verknüpft ist, durchführbar ist; und
- die Steuerung angepasst ist, die zumindest eine wählbaren Aktion auf der Anzeige zu präsentieren.

10. Kommunikationsendgerät nach Anspruch 9, wobei die erste und zweite Anwendung eine von einer Media Player-Anwendung, einer Nachrichtenanwendung, einer Kalenderanwendung, einer Telefonbuchanwendung, einer Bildaufnahmeanwendung, einer Spielanwendung, einer Web Browser-Anwendung, einer Alarmanwendung, einer Synchronisierungsanwendung oder einer beliebigen Kombination davon sind.

11. Computerprogrammprodukt, das in einem Speicher eines Kommunikationsendgeräts verkörpert ist, umfassend Software-Anweisungen, das, wenn es in einer Steuerung des Kommunikationsendgeräts ausgeführt wird, das Verfahren nach einem der Ansprüche 1-8 durchführt.

## Revendications

1. Procédé pour exécuter une tâche sur un terminal de communication (100, 200) comprenant un dispositif d'affichage (223, 323), ledit procédé comprenant :
- la réception d'une indication pour lancer un premier élément associé à une première application (550) ;
- le marquage du premier élément pour une utilisation ultérieure par un second élément ;
- la réception d'une indication pour lancer un second élément associé à une seconde application (552) ;
**caractérisé en ce que** :
ledit premier élément est un élément de contenu, un élément d'information étant associé audit élément de contenu, ledit élément d'information indiquant si ledit élément de contenu est marqué comme actif pour une utilisation ultérieure par le second élément, ou si ledit élément de contenu est passif par rapport audit second élément ;
le procédé étant en outre **caractérisé en ce qu'**il comprend :
- l'analyse des premier et second éléments (556) pour déterminer au moins une action sélectionnable disponible pour combiner les première et seconde applications et pouvant être exécutée par la seconde application en utilisant le contenu marqué comme actif associé audit premier élément (558) ; et
- la présentation de ladite au moins une action sélectionnable (560) sur le dispositif d'affichage.

2. Procédé selon la revendication 1, où la réception de l'indication pour lancer le second élément associé à la seconde application est terminée avant que l'analyse du premier élément associé à la première application soit achevée.

3. Procédé selon la revendication 1, comprenant en outre :
- l'adaptation d'une interface utilisateur en fonction de l'élément ou des éléments lancés ; et
- la mise en évidence des actions associées aux éléments sélectionnés.

4. Procédé selon la revendication 1, dans lequel, dans ladite présentation, au moins deux actions sélectionnables sont présentées selon une configuration d'utilisateur.

5. Procédé selon la revendication 1, dans lequel, dans ladite présentation, au moins deux actions sélectionnables sont présentées selon un ordre préétabli.

6. Procédé selon la revendication 5, dans lequel, dans ladite présentation, lesdites au moins deux actions sélectionnables sont agencées conformément à l'utilisation précédente dudit terminal de communication, et dans lequel les actions sélectionnables fréquemment utilisées sont présentées dans la partie supérieure d'une liste desdites actions sélectionnables.

7. Procédé selon la revendication 1, comprenant la réception de ladite indication pour lancer ledit second élément dans une période de temps prédéterminée depuis la réception de l'indication pour lancer ledit premier élément, après quoi une liste d'actions sélectionnables disponibles pour combiner les première et seconde applications est présentée.

8. Procédé selon la revendication 1, dans lequel ladite réception d'une indication pour lancer un second élément associé à une seconde application implique la réception d'une indication à l'aide d'une clé matérielle, d'une touche programmable ou d'un écran tactile ou de toute combinaison de ceux-ci.

9. Terminal de communication (100, 200) configuré pour exécuter une tâche impliquant au moins un premier et un second élément, comprenant un dispositif de contrôle (331) et un dispositif d'affichage (223, 323), dans lequel :
- ledit dispositif de contrôle est destiné à recevoir une indication pour lancer un premier élément associé à une première application ;
- ledit dispositif de contrôle est destiné à marquer le premier élément pour une utilisation ultérieure par un second élément ;
- ledit dispositif de contrôle est destiné à recevoir une indication pour lancer un second élément associé à une seconde application ;
**caractérisé en ce que** :
- ledit premier élément est un élément de contenu, un élément d'information étant associé audit élément de contenu, ledit élément d'information indiquant si ledit élément de contenu est marqué comme actif pour une utilisation ultérieure par le second élément, ou s'il est passif par rapport audit second élément ;
- ledit dispositif de contrôle est destiné à analyser les premier et second éléments pour déterminer au moins une action sélectionnable disponible pour combiner les première et seconde applications et pouvant être exécutée par la seconde application en utilisant le contenu marqué comme actif associé audit premier élément ; et
- ledit dispositif de contrôle est destiné à présenter ladite au moins une action sélectionnable sur le dispositif d'affichage.

10. Terminal de communication selon la revendication 9, dans lequel lesdites première et seconde applications sont l'une quelconque des applications parmi une application de reproduction, une application de message, une application de calendrier, une application de répertoire téléphonique, une application de capture d'image, une application de jeu, une application d'exploration du web, une application d'alarme, une application de synchronisation, ou toute combinaison de celles-ci.

11. Progiciel incorporé dans une mémoire d'un terminal de communication comprenant des instructions logicielles qui, lorsqu'elles sont exécutées dans un dispositif de contrôle dudit terminal de communication, réalisent le procédé selon l'une quelconque des revendications 1 à 8.
